# EUROPÄISCHE PATENTSCHRIFT

(11) **EP 3 847 382 B1**
(45) Veröffentlichungstag und Bekanntmachung des Hinweises auf die Patenterteilung: **03.05.2023**
(21) Anmeldenummer: 19762976.9
(22) Anmeldetag: 04.09.2019
(51) Int. Cl.: F16C 33/04, F16B 21/06, F16B 21/16

(54) **SICHERUNGSELEMENT ZUM AXIALEN SICHERN EINER WELLE**
SECURING ELEMENT FOR AXIALLY SECURING A SHAFT
ÉLÉMENT DE BLOCAGE POUR BLOQUER UN ARBRE AXIALEMENT

(30) Priorität: 04.09.2018 DE 102018121487
(43) Veröffentlichungstag der Anmeldung: 14.07.2021
(73) Patentinhaber: B. Braun Melsungen AG, 34212 Melsungen (DE)
(72) Erfinder: GERLACH, Hans-Josef, 34431 Marsberg (DE); SCHÄFER, Jens, 70176 Stuttgart (DE); SCHÜTZ, Joachim, 36041 Fulda (DE)
(74) Vertreter: Winter, Brandl - Partnerschaft mbB
(86) Internationale Anmeldenummer: PCT/EP2019/073578
(87) Internationale Veröffentlichungsnummer: WO 2020/049043

(56) Entgegenhaltungen:
- WO-A1-2017/209709
- DE-A1- 3 810 822
- DE-A1-102012 013 991
- DE-A1-102012 013 992
- JP-A- S57 124 116
- SE-C2- 526 504
- US-A- 554 431

## Beschreibung

Die vorliegende Erfindung betrifft ein Sicherungselement zum axialen Sichern eines Bauteils mit einer Welle, mit wenigstens zwei Sektorelementen, die miteinander zu einer geschlossenen Ringform mit einer zentralen Durchgangsöffnung für die Welle fügbar sind, wobei die Sektorelemente jeweils Raststrukturen aufweisen, mittels denen sie miteinander verbindbar sind, insbesondere verliersicher verbindbar sind.

### Allgemeiner technischer Hintergrund

Bei der Anordnung von Bauteilen auf einer Welle oder einer Welle in oder an einem Bauteil werden Sicherungselemente der eingangs genannten Art verwendet, um eine axialfeste Positionierung von Welle und Bauteil zueinander zu bewirken. Dabei muss das Sicherungselement insbesondere in der Lage sein, zwischen Welle und Bauteil wirkende Axialkräfte aufzunehmen und zwischen diesen zu übertragen.

### Stand der Technik

Aus dem Stand der Technik sind insbesondere als Seeger-Ringe bezeichnete Sicherungselemente bekannt, die in der DIN 471 normiert sind. Daneben sind Wellensicherungsringe nach DIN 6799 bekannt. Diese bekannten Sicherungsringe bestehen nicht aus einem vollständigen Ring, sondern nur aus einem Teilringsegment mit zwei einander gegenüberliegenden Segmentenden, zwischen denen sich eine Lücke oder ein Spalt befindet. Diese Lücke oder Spalt dient der Montierbarkeit der Sicherungselemente, indem das Teilringsegment unter idealerweise rein elastischer Verformung auf einer Welle oder in einer Bohrung montiert wird. Derartige Sicherungsringe tendieren infolge ihrer elastischen, gewollten Verformbarkeit bei extremer Belastung, insbesondere axialer Belastung (z.B. bei einem Gerätesturz) zu einer abermaligen, ungewollten Verformung bis hin zu einem Abspringen von der Welle / aus der Bohrung, da sich die Sicherungsringe einfach weiten / verengen können und somit nicht stets sicher in einer Nut der Welle / der Bohrung gehalten sind. Es ist daher in nachteiliger Weise nicht selten möglich, dass derartige Sicherungsringe schon versagen, bevor ihr Material tatsächlich über die Schergrenze hinaus verformt wird. Ein weiterer Nachteil ist, dass diese bekannten Sicherungsringe außerdem im Rahmen ihrer Montage geöffnet / geschlossen und damit aufgeweitet / verengt werden müssen. Insbesondere bei Sicherungsringen nach DIN 471 besteht die Gefahr einer plastischen Verformung des Materials bei der Montage, wodurch die axiale Belastbarkeit der Sicherung zum Teil deutlich vermindert werden kann.

Aus der DE 10 2012 013991 A1 ist eine Axiallageranordnung mit einer Welle, einem an der Welle gelagerten Bauteil und einer in einer Nut der Welle aufgenommenen Scheibenanordnung bekannt. Die Scheibenanordnung ist benachbart zu dem Bauteil angeordnet, so dass Axialkräfte von dem Bauteil über die Scheibenanordnung in die Welle leitbar sind. Während die Scheibenanordnung eine axiale Scheibendicke aufweist, weist die Nut eine axiale Nutbreite auf, die größer ist als die Scheibendicke. In die Nut ist daher ein Ringteil als Ausgleich eingesetzt, so dass Axialkräfte von dem Bauteil über die Scheibenanordnung und über das Ringteil in die Welle leitbar sind. Bei dieser Scheibenanordnung ist von Nachteil, dass die beiden Ringsegmente der Scheibenanordnung in axialer Richtung miteinander zu fügen sind, wodurch das weitere Ringteil zur axialbestimmten Positionierung erforderlich ist.

Aus der DE 10 2012 013992 A1 ist eine Sicherungsscheibe für Wellen nach dem Oberbegriff des Anspruchs 1 mit einem ersten und einem zweiten Sektor-Element bekannt, die zu einer Kreisform verbindbar sind. Die Sektor-Elemente weisen jeweils einen ringsektorförmigen Grundkörper mit zwei Enden auf, wobei das eine Ende jedes Grundkörpers eine Rastnase und das andere Ende jedes Grundkörpers eine Rastnut aufweist. Die Sektor-Elemente sind zur Bildung einer Sicherungsscheibe so miteinander verbindbar, dass die Rastnase des ersten Sektor-Elementes in die Rastnut des zweiten Sektor-Elementes einrastet, wobei die Verrastung so ausgebildet ist, dass die Sektor-Elemente verliersicher miteinander gekoppelt sind. Bei dieser Sicherungsscheibe ist von Nachteil, dass die beiden Grundkörper unter Verformung ihres Außenumfangs zumindest im Bereich der Rastnase miteinander zu fügen sind, so dass die relative Position der Grundkörper zueinander bei mehrfacher Verwendung in Folge von Ausleiern unbestimmt werden kann.

Aus der AT 236 709 B ist eine Einrichtung zum Sichern eines Maschinenteiles auf einer Welle gegen axiale Verschiebung in Form eines geteilten Sicherungsringes bekannt. Dieser weist zwei in sich federnde Ringsegmente von gleicher Gestalt auf, deren freie Enden in der Ringebene als Haken ausgebildet sind. Die Haken gleiten beim Zusammensetzen der Ringsegmente in einer Nut der Welle federnd übereinander, bis sie in die Hakenausnehmungen des Gegensegmentes einspringen und die Segmente in der Form eines vollständigen Ringes zusammenhalten. Jedes der beiden Ringsegmente ist bei im Wesentlichen starrer Ausbildung des Segmentkörpers an der einen Seite zu einem federnden Kragarm verjüngt, der in einem nasenförmigen Vorsprung endet und dessen Innenkante gegenüber der des starren Segmentköpers zur Aufnahme eines Sperrteiles des anderen Ringsegmentes abgesetzt ist. Dagegen weist die andere Seite des Ringsegmentes eine Zunge auf, deren Außenkante gegenüber der Außenkante des Segmentkörpers abgesetzt ist. Zwischen der Außenkante der Zunge und der Außenkante des Segmentkörpers ist eine der Aufnahme des nasenförmigen Vorsprunges des anderen Ringsegmentes dienende Aussparung gebildet. Bei diesem Sicherungsring ist von Nachteil, dass die beiden Segmente durch Aufweiten der gesamten Segmente unter Verformung zumindest im Bereich der Kragarme miteinander zu fügen sind, so dass die relative Position der Segmente zueinander bei mehrfacher Verwendung durch Ausleiern unbestimmt werden kann.

Aus der US 554 431 A, der DE 38 10 822 A1 und der JP S57 124116 A sind jeweils zweiteilige Unterlegscheiben bekannt, deren Sektorelemente schwalbenschwanzartige bzw. puzzleartige Verbindungen eingehen und daher parallel zu einer Wellenlängsrichtung zu fügen sind.

### Kurzbeschreibung der Erfindung

Ausgehend von der vorstehend erläuterten Problematik liegt der Erfindung die Aufgabe zugrunde, die zuvor angeführten Nachteile zu beseitigen, insbesondere soll eine Lösung gefunden werden, die eine robuste axiale Sicherung auf einer Welle mit Nut zur Verfügung stellt.

Diese Aufgabe wird nach der Erfindung gelöst durch ein Sicherungselement (Wellenring) mit den Merkmalen des Patentanspruchs 1. Vorteilhafte Ausgestaltungen der Erfindung sind Gegenstand der Unteransprüche.

Die Erfindung stellt insbesondere ein Sicherungselement (Wellenring) zum axialen Sichern eines Bauteils mit einer Welle, und/oder einer Welle in einem Bauteil wie einem Gehäuse und/oder eines Bauteils auf einer Welle, zur Verfügung, mit zwei Sektorelementen in Form von Halbkreisscheiben (Halbringscheiben), die jeweils eine halbkreisförmige Außenkante sowie eine innere gerade Scheibenkante, die eine im Wesentlichen halbkreisförmige Einkerbung ausformt, aufweist und die miteinander zu einer geschlossenen Ringform mit einer zentralen Durchgangsöffnung für die Welle fügbar sind, wobei die Sektorelemente jeweils Raststrukturen (Nut- und Feder-Profile), die insbesondere als Schnappstrukturen ausgebildet sein können, aufweisen, mittels denen sie miteinander verbindbar sind, insbesondere verliersicher verbindbar sind, wobei die Raststrukturen zumindest eine in ein erstes der Sektorelemente eingebrachte nutartige Vertiefung mit einem ersten Rasthaken/Hinterschneidung und zumindest einen an einem zweiten der Sektorelemente angeordneten und in die Nut im ersten Sektorelement eingreifenden Federarm mit einem zweiten Rasthaken/Vorsprung umfassen. Dabei sind die (alle) Raststrukturen jeder Halbkreisscheibe jeweils (vollständig) zu deren halbkreisförmiger Außenkante sowie zu deren halbkreisförmiger Einkerbung (radial) beabstandet / versetzt an deren innerer gerader Scheibenkante angeordnet.

Die Sektorelemente sind entlang einer Teilungsebene geteilt, in der bei bestimmungsgemäßer Anordnung der Sektorelemente an einer Welle deren Längsachse liegt. Durch eine solche Teilung können die Sektorelemente besonders einfach an / auf der Welle und insbesondere in einer darin eingebrachten Nut angeordnet werden. Die Fügerichtung zum Fügen der Sektorelemente ist senkrecht zur Teilungsebene, das heißt die Sektorelemente sind eingerichtet, senkrecht zur Welle, das heißt in radialer Richtung zusammengefügt zu werden.

Man kann auch sagen, dass die Raststrukturen jeder Halbkreisscheibe jeweils (vollständig) zwischen deren halbkreisförmiger Außenkante und deren halbkreisförmiger Einkerbung an deren innerer gerader Scheibenkante angeordnet sind, genauer gesagt zwischen den Enden der jeweils mit der inneren Scheibenkante zusammentreffenden halbkreisförmigen Außenkante und denen der halbkreisförmigen Einkerbung.

Besonders bevorzugt sind die (alle) Raststrukturen der Halbkreisscheiben jeweils (im Wesentlichen) mittig zwischen (den Enden) der teilkreisförmigen Außenkante und (den Enden) der halbkreisförmigen Einkerbung an den geraden Scheibenkanten angeordnet.

Konkreter formuliert unterteilen die halbkreisförmigen Einkerbungen jeweils die inneren geraden Scheibenkanten der Halbkreisscheiben (in der Mitte der geraden Scheibenkante) in zwei gerade Kantenabschnitte und ist an jedem geraden Kantenabschnitt jeweils eine Raststruktur mittig, also zwischen (einem Ende) der halbkreisförmigen Außenkante und (einem Ende) der halbkreisförmigen Einkerbung, angeordnet.

Alternativ bevorzugt ist in der jeweils radial äußeren Hälfte der auf diese Weise gebildeten geraden Kantenabschnitte jeweils eine Raststruktur (vollständig) angeordnet.

Auf diese Weise ist es möglich, dass die Halbkreisscheiben radial (in radialer Richtung der Halbkreisscheiben bzw. des Sicherungselements) gefügt werden können, ohne dass sich die Halbkreisscheiben beim Fügen bzw. während des Fügens über ihren durch die halbkreisförmige Außenkante definierten Radius hinaus (elastisch ausdehnen / aufweiten und ohne dass sich die Halbkreisscheiben beim Fügen in die halbkreisförmige Einkerbung hinein (elastisch) ausdehnen / aufweiten.

In anderen Worten ausgedrückt besteht das erfindungsgemäße Sicherungselement bzw. Wellenring aus zwei Halbkreisscheiben mit jeweils einer inneren geraden Scheibenkante und einer äußeren halbkreisförmigen Scheibenkante. Die innere gerade Scheibenkante formt jeweils eine im Wesentlichen halbkreisförmige Einkerbung aus, derart, dass bei Zusammensetzen der beiden Halbkreisscheiben an deren jeweiligen inneren geraden Scheibenkanten ein zentrales, im Wesentlichen kreisrundes Durchgangsloch entsteht. Zu beiden Seiten jeder halbkreisförmigen Einkerbung sind Rast-, vorzugsweise Schnappstrukturen an der inneren geraden Scheibenkante (stoffeinstückig) ausgebildet, insbesondere in Form eines Schlitzes oder Nut mit in Ein-/Aussteckrichtung wirkender Hinterschneidung und/oder eines Federarms mit in Ein-/Aussteckrichtung wirkenden Vorsprungs, der beim Einstecken des Federarms der einen Halbkreisscheibe in den Schlitz der anderen Halbkreisscheibe zu deren Montage mit der Hinterschneidung in Rastereingriff kommt.

Dabei kann die Halbkreisscheibe nur mit Nuten oder Federarmen ausgebildet sein oder die Halbkreisschreibe kann jeweils eine Nut und einen Federarm aufweisen.

Die Erfindung ermöglicht in vorteilhafter Weise ein Sicherungselement, das zwischen einer Welle und einem zu dieser axialfest anzuordnenden anderen Bauteil, zum Beispiel einem auf der Welle anzuordnenden Lager, in besonders einfacher und sicherer Weise eine axiale Sperrwirkung ausübt. Das Sicherungselement ist dabei zum Ausbilden einer axialfesten Anordnung sowohl bei zur Welle drehfesten als auch bei zur Welle drehbaren Bauteilen geeignet. Die Sektorelemente sind einfach einzeln aus unterschiedlichen Richtungen, insbesondere gegenüberliegenden radialen Richtungen, an der Welle anzuordnen und werden durch ihre Raststrukturen automatisch miteinander zu einem im Wesentlichen ringförmigen, geschlossenen Sicherungselement verbunden, wenn sie in bestimmungsgemäßer Weise an der Welle angeordnet und dabei miteinander zusammengefügt werden. Dabei ist von besonderem Vorteil, dass die Sektorelemente einfach in zur Welle orthogonaler Richtung an dieser angeordnet und miteinander zusammengefügt werden können. Dadurch ist das Sicherungselement nach der Erfindung besonders geeignet für eine Verwendung bei engen Platzverhältnissen und beschränkter Zugänglichkeit, wie zum Beispiel in einer Nut der Welle.

Die Erfindung erzielt dabei insbesondere den Vorteil, dass die Rastverbindung zwischen den einzelnen Sektorelementen infolge der Ausbildung deren Raststrukturen als nutförmige Vertiefung einerseits und in diese eingreifender Federarm andererseits besonders stabil sind und insbesondere sogar unlösbar sein können. Die dabei entstehende Verriegelungsgeometrie stellt sicher, dass die Sektorelemente auch bei gegebenenfalls auftretenden hohen axialen und/oder radialen Kräften geschlossen bleiben. Da zum Lösen der Schnappverbindung zwischen den Raststrukturen eine Relativbewegung des Federarms zu der ihn aufnehmenden nutförmigen Vertiefung erforderlich ist, also ein Lösen der Sektorelemente voneinander insbesondere nicht durch eine Relativbewegung der gesamten Sektorelemente zueinander möglich ist, ist die Kopplung der Sektorelemente aneinander und damit das Sicherungselement besonders sicher und zuverlässig. Nach der Erfindung sind die Raststrukturen der nutförmigen Vertiefung und des Federarms insbesondere derart ausgebildet, dass sie formschlüssig miteinander verrasten. Außerdem können die ganzen Sektorelemente formschlüssig miteinander verbindbar sein.

Vorteilhafte Ausführungsformen der Erfindung sind in den Unteransprüchen beansprucht und werden nachfolgend näher erläutert.

Eine Ausführungsform des Sicherungselements ist dadurch gekennzeichnet, dass die Sektorelemente im Wesentlichen teilringförmig ausgebildet sind. Insbesondere ergänzen sich die Sektorelemente im bestimmungsgemäß zusammengefügten Zustand zu einem vollständigen Ring. Durch diese Ausführungsform ist sichergestellt, dass das Sicherungselement einen besonders großen und die Welle insbesondere vollumfänglich umgebenden Sitz- oder Kontaktbereich mit der Welle (und außerdem mit dem mit der Welle zu fügenden Bauteil) ausbilden kann und derart auch verhältnismäßig große Kräfte material- und bauteilschonend übertragen werden können.

Nach einer weiteren Ausführungsform erstrecken sich die nutartige Vertiefung und der Federarm orthogonal zur Teilungsebene. Dies erleichtert ein Fügen der Sektorelemente miteinander. Insbesondere können die Federarme einfach in die entsprechende Vertiefung eingebracht werden. Die Fügerichtung zum Fügen der Sektorelemente (und damit auch die Richtung für ein gegebenenfalls mögliches Lösen voneinander) ist senkrecht zur Teilungsebene, so dass der Federarm und die Vertiefung beim Fügen eine Art Führung ausbilden, die ein bestimmungsgemäßes Fügen der Sektorelemente erleichtert. Dadurch, dass eine Relativbewegung der Sektorelemente zueinander nur in Richtung orthogonal zur Teilungsebene möglich ist, sind die Sektorelement besonders stabil aneinander angeordnet und ein versehentliches, unbeabsichtigtes Lösen voneinander wird sicher verhindert.

Eine Ausführungsform der Erfindung ist dadurch gekennzeichnet, dass ein erstes der Sektorelemente je einen Federarm auf einer Seite der sich im zusammengefügten Zustand ergebenden Durchgangsöffnung aufweist und ein zweites der Sektorelemente je eine nutartige Vertiefung auf einer Seite der sich im zusammengefügten Zustand ergebenden Durchgangsöffnung aufweist. Diese zur Wellenachse symmetrische Anordnung und Ausbildung begünstigt die Stabilität des Sicherungselements im zusammengefügten Zustand. Wenn dabei nach einer weiteren Ausführungsform die Rasthaken jedes Federarms auf der von der Durchgangsöffnung abgewandten Seite des jeweiligen Federarms angeordnet sind, kann eine besonders stabile Verbindung der Sektorelemente erzielt werden, da eine Relativbewegung der gesamten Sektorelemente zueinander keinen Einfluss auf ein Lösen der Rastverbindungen voneinander hat, sondern nur die Verformung der Federarme in den Vertiefungen. Diese Ausführungsform ist besonders vorteilhaft im Falle von zwei Sektorelementen. Alternativ sind die Rasthaken jedes Federarms auf der von der Durchgangsöffnung zugewandten Seite des jeweiligen Federarms angeordnet, wodurch der gleiche Effekt bewirkt werden kann.

Die ersten Rasthaken und die zweiten Rasthaken können insbesondere miteinander verrastende Flächen aufweisen. Diese sind vorzugsweise derart zur Teilungsebene geneigt sind, dass sie ein unlösbares Verrasten der Sektorelemente ermöglichen. Sie können im Rahmen der Erfindung insbesondere um einen Winkel in einem Bereich von ca. ± 10 °, vorzugsweise von ca. ± 5 °, besonders bevorzugt von ca. 0° zur Teilungsebene angeordnet sein. Je nachdem, wie der Winkel ausgebildet ist, können die beiden Sektorelemente allerdings auch schwerer oder leichter voneinander getrennt werden. Über den Winkel kann die zum Lösen der Verbindung benötigte Kraft (bezogen auf eine Kraft, die in der Ebene der Sektorelemente wirkt) einfach definiert oder eingestellt werden. Durch einen geeigneten Winkel kann so in vorteilhafter Weise eine Trennung mit einer relativ geringen Kraft ermöglicht werden oder es kann eine quasi unlösbare Kopplung der beiden Sektorelemente erzielt werden. Außerdem ermöglicht die Ausbildung der Rastflächen ein sicheres und insbesondere verliersicheres Halten der Raststrukturen aneinander, wobei ein Lösen mit Hilfe eines dafür speziell vorgesehenen Werkzeugs dennoch möglich ist, wenn erwünscht.

Eine weitere Ausführungsform der Erfindung ist dadurch gekennzeichnet, dass die Sektorelemente mittels Sollbruchstellen miteinander verbunden sind, die insbesondere zwischen den Sektorelementen an deren Außenumfang ausgebildet sind. Bei dieser Ausführungsform ist von besonderem Vorteil, dass das Sicherungselement zur Verwendung in Form eines einstückigen Teils zur Verfügung gestellt wird. Dessen Sektorelemente sind durch die Sollbruchstellen ausbildende Materialbrücken, vorzugsweise durch dünne Bereiche am Außenrand / Außenradius des Sicherungselements, miteinander verbunden. Vor einer Verwendung können die Sektorelemente einfach durch Biegung des Sicherungselements um seine Teilungsebene, also quer zur Scheibenebene, auseinander gebrochen werden. Bei dieser Ausführungsform ist vorteilhaft, dass die Sektorelemente bis kurz vor einer Verwendung einander zugeordnet und zusammengefügt bleiben. Dadurch ist stets sichergestellt, dass zwei 100 %-tig zueinander passende Sektorelemente zu einem Sicherungselement zusammengefügt und zur Sicherung verwendet werden. Außerdem sind die bei bestimmungsgemäßer Verwendung miteinander in Eingriff stehende nutförmige Vertiefung sowie der Federarm und deren Raststrukturen vor ungewünschten und deren Funktion ggf. einschränkenden Einflüssen geschützt, da sie miteinander in Eingriff stehen und einander abdecken.

An zumindest einem Sektorelement kann ein Werkzeugangriff ausgebildet sein, insbesondere in Form einer von außen eingebrachten Einkerbung, Kerbe oder Öffnung, um die ersten und zweiten Raststrukturen außer Eingriff zu bringen. Die Einkerbung, Kerbe oder Öffnung ist derart beschaffen und positioniert, dass der Federarm mittels des angesetzten Werkzeugs in der nutartigen Vertiefung verformt werden kann, derart, dass die Raststrukturen von Federarm und Vertiefung durch Wirkung des Werkzeugs außer Eingriff gebracht werden können und die Sektorelemente voneinander gelöst werden können. Die Einkerbung, Kerbe oder Öffnung muss jeweils derart ausgestaltet sein, dass ein Werkzeug zum Lösen der Verbindung in diese eingreifen kann, ohne über den Außenrand des Sicherungselements hinauszuragen. Mit Hilfe des Werkzeugs kann dann ein Nutzer einfach eine radiale Kraft entlang der Trennungslinie ausüben und die beiden Sektorelemente voneinander trennen. Vorzugsweise sind die Rastflächen in einem positiven Winkel zur Teilungsebene angeordnet. Über die Größe dieses Winkels wird die zum Lösen der Verbindung benötigte Kraft definiert.

Es ist besonders vorteilhaft, wenn das Sicherungselement mittels Strahlschneiden, insbesondere mittels Laserschneiden oder Wasserstrahlschneiden hergestellt ist. Dies ermöglicht eine Herstellung der Sektorelemente mit der erforderlichen Genauigkeit und ohne unerwünschte Materialbeeinflussung oder Verziehen der Geometrie.

Das Sicherungselement besteht vorzugsweise aus zwei Sektorelementen, die insbesondere als Hälften des Sicherungselements ausgebildet sein können. Außerdem kann das Sicherungselement aus drei oder vier Sektorelementen bestehen, die insbesondere als Drittel bzw. Viertel des Sicherungselements ausgebildet sein können.

Man kann auch sagen, dass die Erfindung ein Sicherungselement / eine axiale Sicherungsscheibe ermöglicht, das bzw. die radial über / in / auf einer Nut in einer Welle gefügt und dadurch verriegelt werden kann. Es kann insbesondere durch Strahlschneiden hergestellt werden und besteht vorzugsweise aus Metall. Die dabei entstehende Verriegelungsgeometrie stellt sicher, dass die beiden Scheibenhälften / Sektorelemente bei auftretenden axialen Kräften geschlossen bleiben. Die Herstellung kann hierbei insbesondere als ein Teil erfolgen, dessen beide Hälften / Sektorelemente durch dünne Bereiche, die ggf. als Sollbruchstellen ausgebildet sind, miteinander verbunden sind. Vor einer Verwendung werden die Hälften / Sektorelemente auseinander gebrochen. Die dann vorliegende geteilte, mehrteilige, insbesondere zweiteilige Scheibe verrastet mittels einer unlösbaren Schnappverbindung über / in / auf einer Nut (unlösbar ohne Verwendung eines dazu vorgesehenen speziellen Werkzeugs). Die Scheibenhälften / Scheibenteile / Sektorelemente können im Rahmen der Verwendung insbesondere unlösbar miteinander verrasten und weisen somit eine hohe Robustheit gegen axiale stoßartige Belastung auf. Die axiale Sicherungsscheibe kann insbesondere aus zwei vorzugsweise formschlüssig miteinander verbundenen Hälften bestehen (oder einer größeren Anzahl an Sektorelementen). Dadurch können sich die beiden Hälften / Sektorelemente auch bei massiver axialer Belastung nicht voneinander entfernen. Der Innendurchmesser der Scheibe / des Sicherungselements weitet sich somit nicht infolge einer axialen und/oder radialen Belastung. Ein Versagen der Verbindung tritt somit erst bei Materialversagen auf, ein zerstörungsfreies Lösen ist (ohne entsprechendes Werkzeug) nicht möglich. Zudem befindet sich die Scheibe über dem gesamten Umfang der Wellennut im Eingriff, wodurch eine höhere axiale Belastbarkeit bei unveränderten Bauraumverhältnissen (insbesondere dem Innendurchmesser) erzielt wird.

Durch die Erfindung können insbesondere die folgenden Vorteile erzielt werden:
- Einfache Bedienung für den Anwender,
- Durch anfängliche Verbindung der Teile des Sicherungselements ist ein Zusammenpassen stets sichergestellt,
- Kein Aufweiten des Sicherungselements auf der Welle, auch nicht bei extrem hohen Belastungen,
- vollumfänglicher Kontakt mit der Welle, dadurch extrem hohe Belastbarkeit.
- radiales Fügen möglich, ohne dass der Außendurchmesser "atmet" oder verformt wird,
- wegen des rein radialen Fügens muss zur Montage keine weiterer seitlicher Freiraum in axialer Richtung vorhanden sein, daher besonders geeignet zum Einsatz unter axial beengten Bedingungen,
- Sicherungselement kann durch Verwendung speziellen Werkzeugs mehrfach verwendet werden, ohne dass ein Ausleiern auftritt infolge radialer Aufweitung bei der Montage auf der Welle

Weitere Merkmale und Vorteile der Erfindung ergeben sich aus der folgenden beispielhaften und nicht beschränkenden Beschreibung der Figuren. Diese sind lediglich schematischer Natur und dienen nur dem Verständnis der Erfindung. Dabei zeigen:

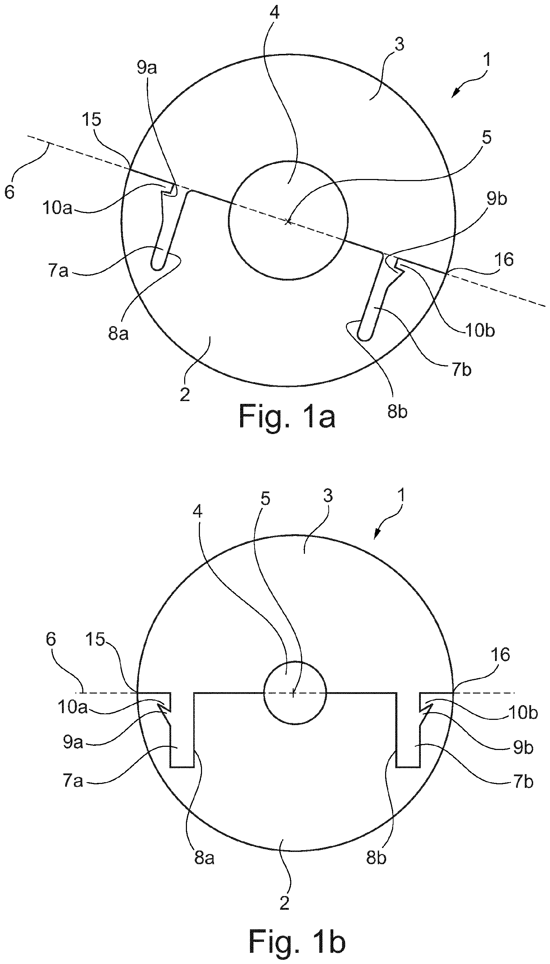

Fig. 1a eine Aufsicht auf ein Sicherungselement in einer unlösbaren Variante nach der Erfindung vor dessen Verwendung,
Fig. 1 b eine Aufsicht auf ein Sicherungselement in einer weiteren unlösbaren Variante nach der Erfindung vor dessen Verwendung,
Fig. 2 eine perspektivische Ansicht des Sicherungselements der Figur 1 a nach Trennung in dessen Einzelteile (Sektorelemente) im Rahmen der Vorbereitung zur Verwendung,
Fig. 3 die voneinander getrennten Einzelteile (Sektorelemente) des Sicherungselements der Figuren 1 und 2,
Fig. 4 eine Detaildarstellung beispielhafter Raststrukturen des Sicherungselements der Erfindung, und
Fig. 5 schematische Darstellungen (Längsschnitt und Querschnitt) eines an einer Welle angeordneten Sicherungselements nach einer weiteren Ausführungsform der Erfindung in einer lösbaren Variante.

Das in Figur 1a gezeigte Ausführungsbeispiel eines Sicherungselements 1 umfasst ein erstes Sektorelement 2 und ein zweites Sektorelement 3. Beide Sektorelemente 2, 3 sind im Wesentlichen ringsegmentförmig ausgebildet, so dass sie im zusammengefügten Zustand (wie in Figur 1a gezeigt) eine zentrale Durchgangsöffnung 4 umschließen. Figur 1a zeigt, dass das Sicherungselement 1 im zusammengefügten Zustand geschlossen ringförmig ist, mit der in seiner Mitte befindlichen zentralen Durchgangsöffnung 4. Das Sicherungselement 1 ist entlang einer durch seinen Mittelpunkt 5 verlaufenden Teilungsebene 6 geteilt.

Das zweite Sektorelement 3 weist zwei Raststrukturen 7a, 7b jeweils in Form eines Federarms 7a, 7b auf. Dabei ist der Federarm 7a auf der einen Seite der Durchgangsöffnung 4 und der Federarm 7b auf der dieser gegenüberliegenden, anderen Seite der Durchgangsöffnung 4 angeordnet. Entsprechend weist das erste Sektorelement 2 zwei Raststrukturen 8a, 8b jeweils in Form einer nutförmigen Vertiefung 8a, 8b auf. Dabei ist die nutförmige Vertiefung 8a auf der einen Seite der Durchgangsöffnung 4 und die nutförmige Vertiefung 8b auf der dieser gegenüberliegenden, anderen Seite der Durchgangsöffnung 4 angeordnet. Die Federarme 7a, 7b und die Vertiefungen 8a, 8b erstrecken sich in eine Richtung senkrecht zur Teilungsebene 6.

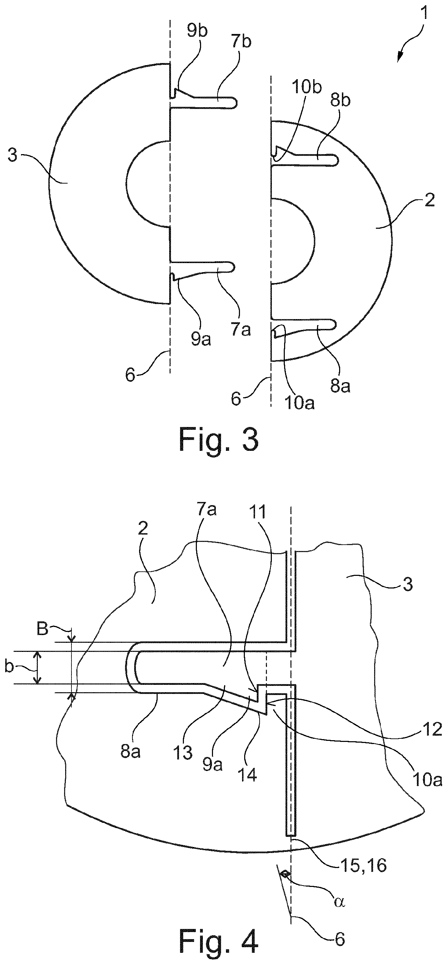

Jeweils auf der von der Durchgangsöffnung 4 abgewandten Seite ist jeder Federarm 7a, 7b mit einem zweiten Rasthaken 9a, 9b versehen. Die Rasthaken 9a, 9b weisen nach radial außen, das heißt sie sind voneinander und von der zentralen Durchgangsöffnung 4 abgewandt. Passend dazu ist jede der nutförmigen Vertiefungen 8a, 8b auf ihrer von der Durchgangsöffnung abgewandten Seite mit einem ersten Rasthaken 10a, 10b versehen. Die zweiten Rasthaken 9a, 9b und die ersten Rasthaken 10a, 10b sind zueinander passend ausgebildet, so dass sie bei bestimmungsgemäßen Zusammenfügen der beiden Sektorelemente 2, 3 miteinander verhaken oder verrasten und derart die Sektorelemente 2, 3 aneinander halten. Wie insbesondere Figur 4 zeigt weisen die zweiten Rasthaken 9a, 9b dazu jeweils eine Rastfläche 11 oder Kontaktfläche 11 auf, die im vorliegenden Beispiel der Figuren 1a, 2 und 3 in einem Winkel α von 0° zur Teilungsebene 6 ausgerichtet ist, also zur Teilungsebene 6 parallel ist. Entsprechend weisen die ersten Rasthaken 10a, 10b jeweils eine Rastfläche 12 oder Kontaktfläche 12 auf, die im vorliegenden Beispiel der Figuren 1a, 2 und 3 ebenfalls jeweils passend zu den Rastflächen 11 in einem Winkel von 0° zur Teilungsebene 6 ausgerichtet ist, also zur Teilungsebene 6 parallel ist. Figur 1b zeigt eine Variante, in der jeweils eine Rastfläche 11 oder Kontaktfläche 11 der zweiten Rasthaken 9a, 9b in einem negativen Winkel α von etwa -10° zur Teilungsebene 6 ausgerichtet ist. Entsprechend weisen die ersten Rasthaken 10a, 10b jeweils eine Rastfläche 12 oder Kontaktfläche 12 auf, die ebenfalls jeweils passend zu den Rastflächen 11 in einem Winkel von -10° zur Teilungsebene 6 ausgerichtet ist.

Figur 4 ergibt außerdem, dass die Breite B der nutförmigen Vertiefung 8a, 8b größer ist als die Breite b des jeweiligen Federarms 7a, 7b. Die Breiten B und b sind derart bemessen, dass der Federarm 7a, 7b beim Einschieben in die nutförmige Vertiefung 8a, 8b derart darin federn kann, im vorliegenden Beispiel in Richtung der Durchgangsöffnung 4 federn kann, dass seine Rasthaken 9a, 9b über die Rasthaken 10a, 10b der Vertiefung gleiten können. Bei Erreichen der bestimmungsgemäßen Endlage, in der die beiden Sektorelemente 2, 3 einander an der Teilungsebene 6 kontaktieren (der in Figur 4 gezeigt Spalt ist nur zur besseren Verständlichkeit der Figur gezeichnet und liegt in der Praxis nicht oder nur mit einem geringen Spaltmaß vor), schnappt der Federarm 7a, 7b in seine Ursprungslage zurück (wie in Figur 4 gezeigt), so dass die zweiten Raststrukturen 9a, 9b und die ersten Raststrukturen 10a, 10b miteinander verhaken.

Wie das Ausführungsbeispiel zeigt, kann die Kontaktfläche 11 ausgebildet sein, indem am Federarm 7a, 7b ein nasenartiger Vorsprung 13 ausgebildet ist. Die Kontaktfläche 12 kann ausgebildet sein, indem in der Vertiefung 8a, 8b eine nutartige Ausnehmung 14 ausgebildet ist.

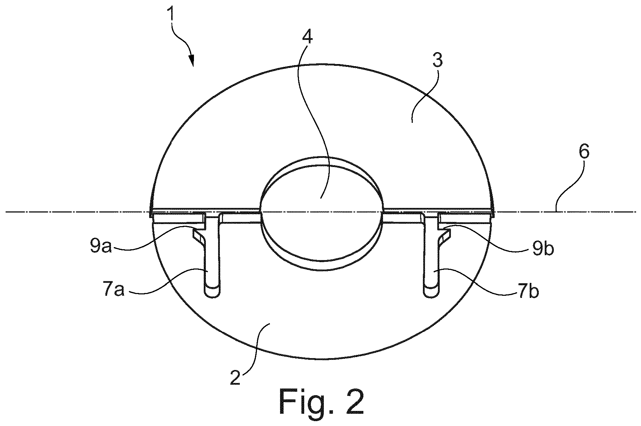

Die Figuren 1a und 1b zeigen jeweils eine Aufsicht auf das Sicherungselement 1 vor dessen Verwendung. In diesem Zustand sind die beiden Sektorelemente 2 und 3 neben den miteinander in Eingriff stehenden Raststrukturen 7a, 7b, 8a, 8b körperlich miteinander verbunden, nämlich über jeweils eine Sollbruchstelle 15, 16 ausbildende Materialbrücken 15, 16 an den sich gegenüber liegenden äußeren Randbereichen der Sektorelemente 2, 3. Diese sind derart beschaffen, dass die beiden Sektorelemente 2, 3 relativ zueinander um eine in der Teilungsebene 6 liegende Biegelinie gebogen werden können, was zu einem Versagen der Sollbruchstellen 15, 16 führt. Die beiden Sektorelemente 2, 3 sind dann nicht mehr körperlich miteinander verbunden und können vollständig voneinander gelöst werden, indem sie (wie in Figur 2 gezeigt ist) weiter um die in der Teilungsebene liegende Biegelinie zueinander gekippt werden, bis die Raststrukturen 7a, 7b des zweiten Sektorelements 3 und die Raststrukturen 8a, 8b des ersten Sektorelements 2 aus ihrem gegenseitigen Eingriff gelöst sind.

Zusammengefasst zeigt das beschriebene Ausführungsbeispiel des Sicherungselements 1 zwei (im Wesentlichen) halbkreisförmige Scheiben (Halbkreisscheiben), die jeweils eine halbkreisförmige Außenkante und eine die beiden Enden der halbkreisförmigen Außenkante verbindende innere gerade Scheibenkante, die eine halbkreisförmige Einkerbung ausformt, aufweisen. Dabei ist die halbkreisförmige Einkerbung (im Wesentlichen) parallel / zentrisch zur halbkreisförmigen Außenkante ausgerichtet bzw. haben diese denselben Kreismittelpunkt. Die Außenkontur des Sicherungselements 1 wird in gefügtem Zustand der Halbkreisscheiben (im Wesentlichen) von den beiden halbkreisförmigen Außenkanten der Halbkreisscheiben bestimmt, die die Ausdehnung des Sicherungselements 1 in radialer Richtung nach außen begrenzen. Die Innenkontur des Sicherungselements 1 wird in gefügtem Zustand der Halbkreisscheiben (im Wesentlichen) durch die beiden halbkreisförmigen Einkerbungen bestimmt, die die Ausdehnung des Sicherungselements 1 in radialer Richtung nach innen begrenzen. Die halbkreisförmigen Einkerbungen unterteilen jeweils die innere gerade Scheibenkante der Halbkreisscheiben in zwei gerade Kantenabschnitte, die jeweils ein Ende der halbkreisförmigen Außenkante mit einem Ende der halbkreisförmigen Einkerbung verbinden.

Im Ausführungsbeispiel der Fig. 1a ist jeweils eine Raststruktur (in etwa) mittig an jedem geraden Kantenabschnitt der Halbkreisscheiben angeordnet. Im Ausführungsbeispiel der Fig. 1b ist jeweils eine Raststruktur in der jeweils radial äußeren Hälfte jedes geraden Kantenabschnitts der Halbkreisscheiben angeordnet. In einem nicht gezeigten Ausführungsbeispiel kann auch jeweils eine Raststruktur in der jeweils radial inneren Hälfte jedes geraden Kantenabschnitts der Halbkreisschreiben angeordnet sein. Dabei erstrecken sich die Raststrukturen aller vorstehend genannter Ausführungsformen (im Wesentlichen) senkrecht zur inneren geraden Scheibenkante bzw. deren geraden Kantenabschnitten, konkret springen die Federarme 7a, 7b (im Wesentlichen) senkrecht von der inneren geraden Scheibenkante vor und sind die Nuten 8a, 8b, welche jeweils einen Nutgrund und zwei sich vom Nutgrund erhebende Seitenwände aufweisen, (im Wesentlichen) senkrecht zur inneren geraden Scheibenkante in die Halbkreisscheibe eingebracht. Dabei befinden dich die Rastvorrichtungen 9a, 9b jeweils an einer Seitenwand der Nut 8a, 8b.

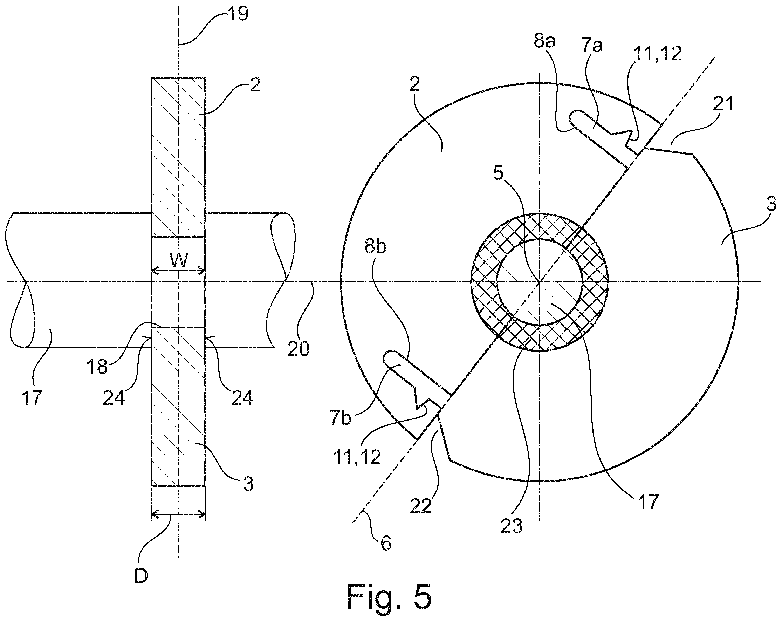

In Figur 5 ist eine lösbare Variante des Sicherungselements 1 gezeigt. Diese entspricht im Wesentlichen der in den Figuren 1a und 1b dargestellten unlösbaren Varianten mit der Ausnahme, dass die Rast- oder Kontaktflächen 11 und 12 in einem positiven Winkel α hier von etwa 10° zur Teilungsebene ausgerichtet sind.

Der vollständig getrennte Zustand beider Sektorelemente 2, 3 ist in Figur 3 gezeigt. Aus diesem können die Sektorelemente 2, 3 einfach an einer Welle 17 in einer darin ausgebildeten Nut 18 angeordnet werden. Dazu werden sie auf gegenüberliegenden Seite der Welle 17 platziert, derart, dass ihre Scheibenebene 19 im Wesentlichen orthogonal zur Längsachse 20 der Welle 17 ausgerichtet ist (siehe Schnittdarstellung der Figur 5). Dann werden die beiden Sektorelemente 2, 3 aufeinander zu sowie in Richtung der Welle 17 in die Nut 18 hinein platziert / gedrückt / gepresst, wobei die Federarme 7a, 7b des zweiten Sektorelements 3 in die nutförmigen Vertiefungen 8a, 8b des ersten Sektorelements 2 unter federnder Verformung, wie vorstehend bereits beschrieben wurde, eindringen, bis die Kontaktflächen 11, 12 miteinander verrasten und eine formschlüssige Verbindung ausbilden. Die Dicke D des Sicherungselements 1 entspricht im Wesentlichen der Weite W der Nut 18, so dass eine lagebestimmte Position des Sicherungselements 1 auf der Welle 17 gegeben ist. Außerdem zeigt Figur 5, dass die beiden Sektorelemente 2, 3 im wieder zusammengefügten Zustand eine zur Welle 17 und die darin vorhandene Nut 18 passende vollumfängliche Ringform ausbilden. Die in Figur 5 kariert gekennzeichnete Kontaktfläche 23 zwischen der Nutwand 24 der Nut 18 und dem Sicherungselement 1 ist vollumfänglich und geschlossen kreisringförmig, so dass eine außerordentlich gute Lastaufnahme und Lastübertragung in axialer Richtung (in Richtung der Längsachse 20 der Welle 17) sichergestellt ist.

Infolge der Geometrie der Raststrukuren 7a, 7b, 8a, 8b bei den Varianten der Figuren 1a und 1b ist diese formschlüssige Verbindung ohne Verwendung eines dazu bestimmten speziellen Werkzeugs nicht lösbar, insbesondere nicht durch Kräfte und Momente, die während eines Einsatzes des Sicherungselements 1 auftreten, es sei denn, es kommt zu einem plastischen Materialversagen. Um eine Lösbarkeit der beiden Sektorelemente 2, 3 voneinander und eine Mehrfachverwendung des Sicherungselements 1 zu ermöglichen, sind bei der Ausführungsform der Figur 5 (zusätzlich zu dem positiven Winkel α der Rastflächen oder Kontaktflächen 11 und 12) an der Außenseite des zweiten Sektorelements 3 beidseitig jeweils eine Kerbe 21, 22 eingebracht. An dieser kann ein dazu bestimmtes Werkzeug angesetzt werden, wodurch eine elastische Verformung der Raststrukturen 7a, 7b, 8a, 8b bewirkt wird, die derart beschaffen ist, dass sich die Kontaktflächen 11, 12 voneinander lösen und die beiden Sektorelemente 2, 3 voneinander gelöst werden können.

### Bezugszeichenliste

- 1: Sicherungselement
- 2: erstes Sektorelement
- 3: zweites Sektorelement
- 4: Durchgangsöffnung
- 5: Mittelpunkt
- 6: Teilungsebene
- 7a: Raststruktur, Federarm
- 7b: Raststruktur, Federarm
- 8a: Raststruktur, nutförmige Vertiefung
- 8b: Raststruktur, nutförmige Vertiefung
- 9a: zweiter Rasthaken
- 9b: zweiter Rasthaken
- 10a: erster Rasthaken
- 10b: erster Rasthaken
- 11: Rastfläche, Kontaktfläche
- 12: Rastfläche, Kontaktfläche
- 13: Vorsprung
- 14: Ausnehmung
- 15: Sollbruchstelle, Materialbrücke
- 16: Sollbruchstelle, Materialbrücke
- 17: Welle
- 18: Nut
- 19: Scheibenebene
- 20: Längsachse der Welle
- 21: Kerbe
- 22: Kerbe
- 23: Kontaktfläche
- 24: Nutwand
- B: Breite Vertiefung
- b: Breite Federarm
- D: Dicke des Sicherungselements
- W: Weite der Nut
- α: Winkel

## Patentansprüche

1. Sicherungselement (1) zum axialen Sichern einer Welle (17) oder eines Bauteils auf einer Welle (17), mit zwei Sektorelementen (2, 3) in Form von Halbkreisscheiben, die jeweils eine halbkreisförmige Außenkante sowie eine innere gerade Scheibenkante, die eine im Wesentlichen halbkreisförmige Einkerbung ausformt, aufweist und die miteinander zu einer im Wesentlichen geschlossenen Ringform mit einer zentralen Durchgangsöffnung (4) für die Welle (17) fügbar sind, wobei
die Sektorelemente (2, 3) jeweils Raststrukturen (7a, 7b, 8a, 8b) oder Schnappstrukturen aufweisen, mittels denen sie miteinander verbindbar sind, insbesondere verliersicher verbindbar sind;
die Raststrukturen (7a, 7b, 8a, 8b) eine in ein erstes der Sektorelemente (2) eingebrachte nutartige Vertiefung (8a, 8b) mit einem ersten Rasthaken (10a, 10b) und einen an einem zweiten der Sektorelemente (3) angeordneten und in die Vertiefung (8a, 8b) im ersten Sektorelement (2) eingreifenden Federarm (7a, 7b) mit einem zweiten Rasthaken (9a, 9b) aufweisen;
die Raststrukturen (7a, 7b, 8a, 8b) jedes Sektorelements (2, 3) jeweils an dessen innerer gerader Scheibenkante angeordnet sind;
die Sektorelemente (2, 3) entlang einer Teilungsebene (6) geteilt sind, in der bei bestimmungsgemäßer Anordnung an der Welle (17) deren Längsachse (20) liegt, wobei die Fügerichtung zum Fügen der Sektorelemente (2, 3) senkrecht zur Teilungsebene (6) ist;
**dadurch gekennzeichnet, dass**
die Raststrukturen (7a, 7b, 8a, 8b) jedes Sektorelements (2, 3) jeweils zu dessen halbkreisförmiger Außenkante sowie zu dessen halbkreisförmiger Einkerbung radial beabstandet angeordnet sind.

2. Sicherungselement (1) nach Anspruch 1, **dadurch gekennzeichnet, dass** die Sektorelemente (2, 3) im Wesentlichen teilringförmig ausgebildet sind.

3. Sicherungselement (1) nach Anspruch 1 oder 2, **dadurch gekennzeichnet, dass** sich die nutartige Vertiefung (8a, 8b) und der Federarm (7a, 7b) orthogonal zur Teilungsebene (6) erstrecken.

4. Sicherungselement (1) nach einem der vorstehenden Ansprüche, **dadurch gekennzeichnet, dass** das zweite der Sektorelemente (3) je einen Federarm (7a, 7b) auf einer Seite der sich im zusammengefügten Zustand ergebenden Durchgangsöffnung (4) aufweist und das erste der Sektorelemente (2) je eine nutartige Vertiefung (8a, 8b) auf einer Seite der sich im zusammengefügten Zustand ergebenden Durchgangsöffnung (4) aufweist.

5. Sicherungselement (1) nach einem der vorstehenden Ansprüche, **dadurch gekennzeichnet, dass** die Rasthaken (9a, 9b) jedes Federarms (7a, 7b) auf der von der Durchgangsöffnung (4) abgewandten Seite des jeweiligen Federarms (7a, 7b) angeordnet sind, oder dass die Rasthaken (9a, 9b) jedes Federarms (7a, 7b) auf der der Durchgangsöffnung (4) zugewandten Seite des jeweiligen Federarms (7a, 7b) angeordnet sind.

6. Sicherungselement (1) nach einem der vorstehenden Ansprüche, **dadurch gekennzeichnet, dass** die zweiten Rasthaken (9a, 9b) und die ersten Rasthaken (10a, 10b) miteinander verrastende Flächen (11, 12) aufweisen, die derart zur Teilungsebene (6) geneigt sind, dass sie ein unlösbares Verrasten der Sektorelemente (2, 3) ermöglichen, insbesondere indem sie um einen Winkel α in einem Bereich von ca. ± 10°, vorzugsweise von ca. ± 5°, besonders bevorzugt von ca. 0° zur Teilungsebene (6) angeordnet sind.

7. Sicherungselement (1) nach einem der vorstehenden Ansprüche, **dadurch gekennzeichnet, dass** die Sektorelemente (2, 3) mittels Sollbruchstellen (15, 16) miteinander verbunden sind, die insbesondere zwischen den Sektorelementen (2, 3) an deren Außenumfang ausgebildet sind.

8. Sicherungselement (1) nach einem der vorstehenden Ansprüche, **dadurch gekennzeichnet, dass** an zumindest einem Sektorelement (2, 3) ein Werkzeugangriff (21, 22) ausgebildet ist, insbesondere in Form einer von außen eingebrachten Einkerbung (21, 22) oder Öffnung, um die ersten und zweiten Raststrukturen außer Eingriff zu bringen.

9. Sicherungselement (1) nach einem der vorstehenden Ansprüche, **dadurch gekennzeichnet, dass** die halbkreisförmige Einkerbung jedes Sektorelements (2, 3) dessen innere gerade Scheibenkante in zwei gerade Kantenabschnitte unterteilt und an jedem geraden Kantenabschnitt der Sektorelemente (2, 3) jeweils eine Raststruktur (7a, 7b, 8a, 8b) mittig angeordnet ist.

10. Sicherungselement (1) nach einem der Ansprüche 1 bis 8, **dadurch gekennzeichnet, dass** die halbkreisförmige Einkerbung jedes Sektorelements (2, 3) dessen innere gerade Scheibenkante in zwei gerade Kantenabschnitte unterteilt und in einer jeweils radial äußeren Hälfte der geraden Kantenabschnitte jeweils eine Raststruktur (7a, 7b, 8a, 8b) angeordnet ist.

11. Verfahren zur Herstellung eines Sicherungselements (1) nach einem der vorstehenden Ansprüche, **dadurch gekennzeichnet, dass** das Sicherungselement (1) mittels Laserschneiden oder Wasserstrahlschneiden hergestellt wird.

## Claims

1. Securing element (1) for axially securing a shaft (17) or a component on a shaft (17), comprising two sector elements (2, 3) in the form of semicircular disks, each having a semicircular outer edge as well as an inner, straight disk edge forming a substantially semicircular notch, and which can be joined to each other to form an essentially closed ring form with a central through opening (4) for the shaft (17),
wherein the sector elements (2, 3) each have latching structures (7a, 7b, 8a, 8b) or snap-fit structures, by means of which they can be connected to each other, in particular can be connected in a loss-proof manner;
the latching structures (7a, 7b, 8a, 8b) comprise a groove-like indentation (8a, 8b) with a first snap-fit hook (10a, 10b) formed in a first one of the sector elements (2) and a spring arm (7a, 7b) with a second snap-fit hook (9a, 9b) arranged on a second one of the sector elements (3) and engaging in the indentation (8a, 8b) in the first sector element (3);
the latching structures (7a, 7b, 8a, 8b) of each sector element (2, 3) are each arranged at its inner, straight disk edge;
the sector elements (2, 3) are divided along a dividing plane (6) in which the longitudinal axis (20) of the shaft (17) lies when arranged as intended on the shaft (17), wherein the joining direction for joining the sector elements (2, 3) is perpendicular to the dividing plane (6);
**characterized in that**
the latching structures (7a, 7b, 8a, 8b) of each sector element (2, 3) are each arranged at a radial distance from its semicircular outer edge and from its semicircular notch.

2. Securing element (1) according to claim 1, **characterized in that** the sector elements (2, 3) essentially have a partial annular shape.

3. Securing element (1) according to claim 1 or 2, **characterized in that** the groove-like indentation (8a, 8b) and the spring arm (7a, 7b) extend orthogonally to the dividing plane (6).

4. Securing element (1) according to one of the preceding claims, **characterized in that** the second one of the sector elements (3) has a respective spring arm (7a, 7b) on one side of the through opening (4) resulting in the joined state and the first one of the sector elements (2) has a respective groove-like indentation (8a, 8b) on one side of the through opening (4) resulting in the joined state.

5. Securing element (1) according to one of the preceding claims, **characterized in that** the snap-fit hooks (9a, 9b) of each spring arm (7a, 7b) are arranged on the side of the respective spring arm (7a, 7b) facing away from the through opening (4), or **in that** the snap-fit hooks (9a, 9b) of each spring arm (7a, 7b) are arranged on the side of the respective spring arm (7a, 7b) facing the through opening (4).

6. Securing element (1) according to one of the preceding claims, **characterized in that** the second snap-fit hooks (9a, 9b) and the first snap-fit hooks (10a, 10b) have interlocking surfaces (11, 12) which are inclined with respect to the dividing plane (6) in such a way that they enable the sector elements (2, 3) to be latched in an undetachable manner, in particular by being arranged at an angle α in a range of approx. ± 10°, preferably of approx. ± 5°, particularly preferably of approx. 0° to the dividing plane (6).

7. Securing element (1) according to one of the preceding claims, **characterized in that** the sector elements (2, 3) are connected to each other by means of predetermined breaking points (15, 16) which are formed in particular between the sector elements (2, 3) on their outer circumference.

8. Securing element (1) according to one of the preceding claims, **characterized in that** a tool attachment portion (21, 22) is formed on at least one sector element (2, 3), in particular in the form of a notch (21, 22) or opening formed from the outside, in order to disengage the first and second latching structures.

9. Securing element (1) according to one of the preceding claims, **characterized in that** the semicircular notch of each sector element (2, 3) divides its inner, straight disk edge into two straight edge sections, and a respective latching structure (7a, 7b, 8a, 8b) is arranged centrally on each straight edge section of the sector elements (2, 3).

10. Securing element (1) according to one of claims 1 to 8, **characterized in that** the semicircular notch of each sector element (2, 3) divides its inner, straight disk edge into two straight edge sections, and a respective latching structure (7a, 7b, 8a, 8b) is arranged in a respective radially outer half of the straight edge sections.

11. Method for producing a securing element (1) according to one of the preceding claims, **characterized in that** the securing element (1) is produced by means of laser cutting or water jet cutting.

## Revendications

1. Élément de protection (1) pour protéger axialement un arbre (17) ou un composant sur un arbre (17), avec deux éléments sectoriels (2, 3) sous la forme de disques semi-circulaires, qui présente respectivement un bord extérieur semi-circulaire, ainsi qu'un bord de disque droit intérieur, qui forme une rainure sensiblement semi-circulaire, et qui peuvent être assemblés l'un à l'autre en une forme annulaire sensiblement fermée avec une ouverture traversante centrale (4) pour l'arbre (17), dans lequel
les éléments sectoriels (2, 3) présentent respectivement des structures d'encliquetage (7a, 7b, 8a, 8b) ou des structures de capture, au moyen desquelles ils peuvent être reliés les uns aux autres, en particulier peuvent être reliés de manière à ne pas pouvoir être perdus ;
les structures d'encliquetage (7a, 7b, 8a, 8b) présentent un évidement (8a, 8b) en forme de rainure réalisé dans un premier des éléments sectoriels (2) avec un premier crochet d'encliquetage (10a, 10b) et un bras élastique (7a, 7b) disposé sur un second des éléments sectoriels (3) et entrant en prise dans l'évidement (8a, 8b) dans le premier élément sectoriel (2) avec un second crochet d'encliquetage (9a, 9b) ;
les structures d'encliquetage (7a, 7b, 8a, 8b) de chaque élément sectoriel (2, 3) sont disposées respectivement sur leur bord de disque droit intérieur ;
les éléments sectoriels (2, 3) sont divisés le long d'un plan de division, dans lequel lors de l'agencement conformément aux conditions leur axe longitudinal (20) se trouve sur l'arbre (17), dans lesquels la direction d'assemblage pour assembler les éléments sectoriels (2, 3) est perpendiculaire au plan de division (6) ;
**caractérisé en ce que**
les structures d'encliquetage (7a, 7b, 8a, 8b) de chaque élément sectoriel (2, 3) sont disposées respectivement de manière à être espacées radialement de son bord extérieur semi-circulaire, ainsi que de sa rainure semi-circulaire.

2. Élément de protection (1) selon la revendication 1, **caractérisé en ce que** les éléments sectoriels (2, 3) sont conçus sensiblement sous forme d'anneau partiel.

3. Élément de protection (1) selon la revendication 1 ou 2, **caractérisé en ce que** l'évidement (8a, 8b) en forme de rainure et le bras élastique (7a, 7b) s'étendent orthogonalement au plan de division (6).

4. Élément de protection (1) selon l'une quelconque des revendications précédentes, **caractérisé en ce que** le second des éléments sectoriels (3) présente chacun un bras élastique (7a, 7b) sur un côté de l'ouverture traversante (4) résultant de l'état assemblé et **en ce que** le premier des éléments sectoriels (2) présente chacun un évidement (8a, 8b) en forme de rainure sur un côté de l'ouverture traversante (4) résultant de l'état assemblé.

5. Élément de protection (1) selon l'une quelconque des revendications précédentes, **caractérisé en ce que** les crochets d'encliquetage (9a, 9b) de chaque bras élastique (7a, 7b) sont disposés sur le côté opposé de l'ouverture traversante (4) de chaque bras élastique (7a, 7b), ou **en ce que** les crochets d'encliquetage (9a, 9b) de chaque bras élastique (7a, 7b) sont disposés sur le côté tourné vers l'ouverture traversante (4) de chaque bras élastique (7a, 7b).

6. Élément de protection (1) selon l'une quelconque des revendications précédentes, **caractérisé en ce que** le second crochet d'encliquetage (9a, 9b) et le premier crochet d'encliquetage (10a, 10b) présentent des surfaces (11, 12) encliquetées les unes avec les autres, qui sont inclinées par rapport au plan de division (6) de telle manière qu'elles permettent un encliquetage inamovible des éléments sectoriels (2, 3), en particulier en étant disposées à un angle a dans une plage d'environ ± 10°, de préférence d'environ ± 5°, le plus préférentiellement d'environ 0° au plan de division (6).

7. Élément de protection (1) selon l'une quelconque des revendications précédentes, **caractérisé en ce que** les éléments sectoriels (2, 3) sont reliés entre eux au moyen de points de rupture théoriques (15, 16), qui sont conçus en particulier entre les éléments sectoriels (2, 3) sur leur périphérie extérieure.

8. Élément de protection (1) selon l'une quelconque des revendications précédentes, **caractérisé en ce qu'**un point de contact d'outil (21, 22) est conçu sur au moins un élément sectoriel (2, 3), en particulier sous la forme d'une rainure (21, 22) ou d'une ouverture réalisée de l'extérieur pour désolidariser les première et seconde structures d'encliquetage.

9. Élément de protection (1) selon l'une quelconque des revendications précédentes, **caractérisé en ce que** la rainure semi-circulaire de chaque élément sectoriel (2, 3) divise son bord de disque droit intérieur en deux parties de bord droites et au niveau de chaque partie de bord droite des éléments sectoriels (2, 3) une structure d'encliquetage (7a, 7b, 8a, 8b) est disposée respectivement au centre.

10. Élément de protection (1) selon l'une quelconque des revendications 1 à 8, **caractérisé en ce que** la rainure semi-circulaire de chaque élément sectoriel (2, 3) divise son bord de disque droit en deux parties de bord droites et respectivement une structure d'encliquetage (7a, 7b, 8a, 8b) est disposée respectivement dans une moitié radialement extérieure des parties de bord droites.

11. Procédé de fabrication d'un élément de protection (1) selon l'une quelconque des revendications précédentes, **caractérisé en ce que** l'élément de protection (1) est fabriqué au moyen de découpe au laser ou de découpe au jet d'eau.
